# EUROPEAN PATENT SPECIFICATION

(11) **EP 0 517 800 B1**
(45) Date of publication and mention of the grant of the patent: **21.01.1998**
(21) Application number: 91905638.2
(22) Date of filing: 27.02.1991
(51) Int. Cl.: G01J 3/42, G01J 3/28, G01N 21/27

(54) **AN ''IN-LINE'' SPECTRAL REFERENCE METHOD FOR SPECTROMETERS**
"IN-LINE"-SPEKTRALE REFERENZMETHODE FÜR SPEKTROMETER
PROCEDE DE REFERENCE SPECTRAL ''EN LIGNE'' POUR SPECTROMETRES

(30) Priority: 02.03.1990 US 487041
(43) Date of publication of application: 16.12.1992
(73) Proprietor: LANDA, Isaac J., Potomac, MD 20854 (US)
(72) Inventor: LANDA, Isaac J., Potomac, MD 20854 (US)
(74) Representative: VOSSIUS & PARTNER
(86) International application number: PCT/US91/01380
(87) International publication number: WO 91/13325

(56) References cited:
- US-A- 3 700 331
- US-A- 3 744 918
- US-A- 3 811 776
- US-A- 3 973 849
- US-A- 4 529 308
- US-A- 4 838 691
- US-A- 4 937 448
- US, E, Re. 27,270, SELGIN, 01 November 1972

## Description

### SUMMARY OF THE INVENTION

The present invention is a method of introducing a reference material into the optical path of a single-beam spectrometer in order to dynamically measure the superimposed absorption spectrum of the reference material in real-time and to use this spectrum for the purpose of spectral calibration and drift compensation.

Chief among the advantages of this approach is that a dedicated optical beam for reference is not required. In addition, the entire optical system, including the sample and sampling accessories, are included in the calibration and compensation loop.

### BRIEF DESCRIPTION OF THE DRAWING

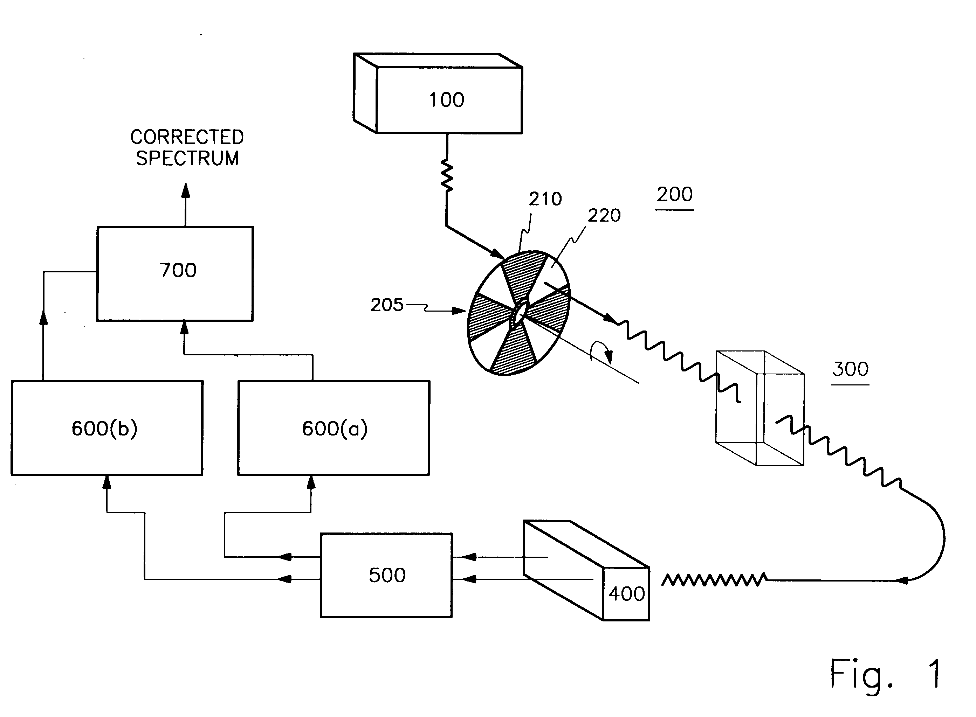

Figure 1 is a flow diagram illustrating the present invention.

### DETAILED DESCRIPTION OF THE PRESENT INVENTION

This "in-line" reference is implemented with a rapidly rotating wheel 205 external to the monochromator, placed in the optical path. Wheel 205 is fabricated such that "open" segments 220 alternate with segments 210 composed of the reference material. The reference material (typically, but not limited, to polystyrene) is largely transparent with a predetermined distinctive and stable absorption spectrum.

The method of the present invention is set forth in Figure 1. Generally, rotation of the wheel 205 is synchronized with the scanning of monochromator 100 to acquire alternating spectral scans, first of the instrument and sample only; and, second of the instrument, sample and reference material. These spectra are compared in such a way as to extract the spectrum of the reference material alone from the total spectrum, and use the information contained in this reference spectrum for real-time, dynamic spectral calibration and drift compensation.

More specifically, step 100 of the method involves the generation of a monochromatic light spectrum using a monochromator. In step 200, the light spectrum from the monochromator is modified by rotating wheel 205 to produce a modified spectrum. Wheel 205 forms an in-line reference space-time multiplexing device.

In step 300, the modified spectrum is directed to the sample to produce a sample convoluted spectrum followed by a reference convoluted spectrum. The sample convoluted spectrum (S x I) contains the sample spectrum and the instrument spectrum. The reference convoluted spectrum (S x R x I) contains the sample spectrum, the reference spectrum (from reference material 210), and the instrument spectrum.

In step 400, the sample convoluted spectrum is detected by an electronic detection module to produce a sample convoluted spectrum signal representing the sample convoluted spectrum and a reference convoluted spectrum signal representing the reference convoluted spectrum. In this manner, steps 100-400 produce two spectra which are time multiplexed by the in-line reference multiplexing device (wheel 205).

In step 500, mathematical deconvolution is performed on the sample convoluted spectrum signal to produce a sample spectrum signal representing the sample spectrum (S) and on the reference convoluted spectrum signal to produce a reference spectrum signal representing the reference spectrum (R). In step 600(a), the sample spectrum signal derived in step 500 is processed. In step 600(b), the reference spectrum signal derived in step 500 is compared to a previously stored reference spectrum to produce a correction function. In step 700, the correction function is applied to the sample spectrum signal by mathematical means.

The result of this method is a corrected, absolute spectrum of a sample with total compensation for intensity drifts, wavelength shifts, and other spectral distortions. The method is applicable to reflectance, transflectance, and transmission measurements.

The reference spectra obtained in this matter is useful for wavelength calibration. It is also clear that the applicability of this "in-line" technique for dynamic drift and wavelength compensation, which requires less fundamental and more complicated algorithmic approaches, can be achieved with chemometrics implementation including Partial Least Squares (PLS), Principle Component Analysis (PCR), etc. This concept has been first proposed for implementation and defined in 1989.

There are many other applications for this type of method. The foregoing description is intended primarily for purposes of illustration. The scope of the invention is defined in Claims 1-6.

### Prior Art

- US-A-3 811 776 discloses a gas analyzer which is calibrated by examination of the fractioned absorption of the sample, but does not correct a dispersion spectrum.
- US-A-3 700 331 involves the predetermined frequencies extracted from the spectrum and identified in a data record as "calibration spikes, the method disclosed therein being applicable only to spectrometers having rotating scanning discs.
- In US-A-4 838 691 a spectrum is scanned across a reference material and the angular separation of known absorption bands is noted. The reference material is then replaced by the sample and the resultant divergence in the said angular separation is an indication of the correction required.

## Claims

1. An in-line spectral method adapted for use with a single-beam reference dispersive spectrometer system scanning a sample, the method comprising the steps of:
(a) scanning a sample rapidly with a single-beam spectrometer (100) to produce an output beam having an entire spectrum;
(b) transmitting the output beam along an optical output path;
(c) placing a wheel (205) in the optical output path, said wheel having open segments (220) alternating with reference segments (210) comprising reference material which is largely transparent and which has a predetermined absorption spectrum;
(d) rotating the wheel (205) in synchronization with the single-beam spectrometer (100) so as to alternate the open segments (220) rapidly with the reference segments (210) while maintaining each of said open segments (220) and each of said reference segments (210) in the optical output path for a sufficient length of time to pass the entire spectrum through the wheel (205);
(e) converting the entire spectrum into a first signal (SxI) representing a dispersive spectral scan of the sample in the spectrometer, and a second signal (SxRxI) representing a dispersive spectral scan of the sample, and the reference material in the spectrometer;
(f) processing the signals from step (e) in real-time in order to extract a signal representing the spectrum of the reference material; and
(g) using the signal representing the extracted spectrum of the reference material to generate a correction function for real-time dynamic spectral compensation of the entire spectrometer system, resulting in a substantially absolute correct sample spectrum;
whereby the absolute correct sample spectrum is independent of variations in the spectrometer and any components in the optical output data.

2. The method according to claim 1, characterised in that step (f) comprises mathematical deconvolution of the spectrum.

3. The method according to claim 1, characterised in that step (g) comprises comparing the extracted spectrum of the reference material to a stored reference spectrum so as to generate the correction function.

4. The method according to claim 1, characterised in that step (f) further comprises processing the signals from step (e) in order to extract a signal representing the spectrum of the sample in the spectrometer.

5. The method according to claim 4, characterised in that step (f) further comprises processing the signal representing the spectrum of the sample in the spectrometer to generate a signal representing the spectrum of the sample alone.

6. The method according to claim 5, characterised in that the correction function generated in step (g) is applied to the signal representing the spectrum of the sample alone to obtain the substantially absolute correct sample spectrum.

## Patentansprüche

1. In-line-Spektralverfahren, angepaßt für den Gebrauch mit einem Einstrahl-Referenzdispersionsspektrometersystem, das eine Probe abtastet, wobei das Verfahren die folgenden Schritte aufweist:
(a) Schnelles Abtasten einer Probe mit einem Einstrahlspektrometer (100) zum Erzeugen eines Austrittsstrahls, der ein vollständiges Spektrum aufweist;
(b) Übertragen des Austrittsstrahls entlang einem optischen Austrittsweg;
(c) Anordnen einer Scheibe (205) in dem optischen Austrittsweg, wobei die Scheibe offene Segmente (220) aufweist, die mit Referenzsegmenten (210) abwechseln, welche Referenzmaterial aufweisen, das im wesentlichen lichtdurchlässig ist und ein vorgegebenes Absorptionsspektrum aufweist;
(d) Drehen der Scheibe (205) synchron mit dem Einstrahlspektrometer (100), so daß die offenen Segmente (220) schnell mit den Referenzsegmenten (210) abwechseln, während jedes der offenen Segmente (220) und jedes der Referenzsegmente (210) über eine ausreichende Zeitspanne in dem optischen Austrittsweg gehalten wird, um das gesamte Spektrum durch die Scheibe (205) hindurchtreten zu lassen;
(e) Umwandeln des gesamten Spektrums in ein erstes Signal (SxI), das eine Abtastung des Dispersionsspektrums der Probe im Spektrometer darstellt, und ein zweites Signal (SxRxI), das eine Abtastung der Dispersionsspektren der Probe und des Referenzmaterials im Spektrometer darstellt;
(f) Verarbeiten des Signals von Schritt (e) in Realzeit, um ein Signal zu extrahieren, welches das Spektrum des Referenzmaterials darstellt; und
(g) Verwendung des Signals, welches das extrahierte Spektrum des Referenzmaterials darstellt, zum Erzeugen einer Korrekturfunktion für eine dynamische spektrale Realzeit-Kompensation des gesamten Spektrometersystems, die ein im wesentlichen absolut korrektes Probenspektrum ergibt;
wodurch das absolut korrekte Probenspektrum von Veränderungen im Spektrometer sowie von irgendwelchen Komponenten in den optischen Ausgangsdaten unabhängig ist.

2. Verfahren nach Anspruch 1, dadurch gekennzeichnet, daß der Schritt (f) eine mathematische Entfaltung (Dekonvolution) des Spektrums aufweist.

3. Verfahren nach Anspruch 1, dadurch gekennzeichnet, daß der Schritt (g) einen Vergleich des extrahierten Spektrums des Referenzmaterials mit einem gespeicherten Referenzspektrum zum Erzeugen einer Korrekturfunktion aufweist.

4. Verfahren nach Anspruch 1, dadurch gekennzeichnet, daß der Schritt (f) ferner die Verarbeitung der Signale von Schritt (e) aufweist, um ein Signal zu extrahieren, welches das Spektrum der Probe im Spektrometer darstellt.

5. Verfahren nach Anspruch 4, dadurch gekennzeichnet, daß der Schritt (f) ferner die Verarbeitung des das Spektrum darstellenden Signals der Probe im Spektrometer aufweist, um ein Signal zu erzeugen, welches das Spektrum der Probe allein darstellt.

6. Verfahren nach Anspruch 5, dadurch gekennzeichnet, dalJ die im Schritt (g) erzeugte Korrekturfunktion auf das Signal angewandt wird, welches das Spektrum der Probe allein darstellt, um ein im wesentlichen absolut korrektes Probenspektrum zu erhalten.

## Revendications

1. Un procédé spectral en ligne apte à être utilisé avec un système de spectromètre par dispersion à référence à faisceau unique, qui explore un échantillon, le procédé comprenant les étapes consistant à:
(a) explorer rapidement un échantillon au moyen d'un spectromètre (100) à faisceau unique afin de produire un faisceau de sortie à spectre entier;
(b) transmettre le faisceau de sortie le long d'un trajet de sortie optique;
(c) placer une roue (205) dans le trajet de sortie optique, ladite roue comportant des segments ouverts (220) alternant avec des segments de référence (210) comprenant une matière de référence qui est quasi totalement transparente et qui possède un spectre d'absorption prédéterminé;
(d) faire tourner la roue (205) en synchronisation avec le spectromètre (100) à faisceau unique de façon à faire alterner rapidement les segments ouverts (220) et les segments de référence (210) tout en maintenant chacun desdits segments ouverts (220) et chacun desdits segments de référence (210) dans le trajet de sortie optique pendant un laps de temps suffisant pour faire passer le spectre entier à travers la roue (205);
(e) convertir le spectre entier en un premier signal (S x I) qui représente une exploration spectrale, par dispersion, de l'échantillon dans le spectromètre et un deuxième signal (S x R x I) qui représente une exploration spectrale, par dispersion, de l'échantillon, et de la matière de référence dans le spectromètre;
(f) traiter en temps réel les signaux provenant de l'étape (e) afin d'extraire un signal représentant le spectre de la matière de référence; et
(g) utiliser le signal représentant le spectre extrait de la matière de référence pour engendrer une fonction de correction pour une compensation spectrale dynamique en temps réel de tout le système de spectromètre, d'où résulte un spectre d'échantillon sensiblement correct absolu;
le spectre d'échantillon correct absolu étant indépendant de variations de spectromètre et de tous composants des données de sortie optique.

2. Le procédé selon la revendication 1, caractérisé en ce que l'étape (f) comprend une déconvolution mathématique du spectre.

3. Le procédé selon la revendication 1, caractérisé en ce que l'étape (g) comprend une comparaison du spectre extrait de la matière de référence à un spectre de référence mémorisé de façon à engendrer la fonction de correction.

4. Le procédé selon la revendication 1 caractérisé en ce que l'étape (f) comprend en outre un traitement des signaux provenant de l'étape (e) afin d'extraire un signal représentant le spectre de l'échantillon dans le spectromètre.

5. Le procédé selon la revendication 4, caractérisé en ce que l'étape (f) comprend en outre un traitement du signal représentant le spectre de l'échantillon dans le spectromètre afin d'engendrer un signal représentant le spectre de l'échantillon seul.

6. Le procédé selon la revendication 5, caractérisé en ce que la fonction de correction engendrée à l'étape (g) est appliquée au signal représentant le spectre de l'échantillon seul pour obtenir le spectre d'échantillon correct absolu.
